(19) 

Europäisches Patentamt

European Patent Office

Office européen des brevets

(11) **EP 1 197 731 B1**

(12) **EUROPÄISCHE PATENTSCHRIFT**

(45) Veröffentlichungstag und Bekanntmachung des Hinweises auf die Patenterteilung:
**22.04.2015 Patentblatt 2015/17**

(51) Int Cl.:
***G01D 3/02*** *(2006.01)*

(21) Anmeldenummer: **01123844.1**

(22) Anmeldetag: **05.10.2001**

(54) **Sensorsystem mit veränderbarer Sensorsignalverarbeitung**

Sensor system with adjustable sensor signal processing

Système de capteur avec traitement réglable du signal de capteur

(84) Benannte Vertragsstaaten:
**CH DE FR GB IT LI NL**

(30) Priorität: **13.10.2000 DE 10050819**

(43) Veröffentlichungstag der Anmeldung:
**17.04.2002 Patentblatt 2002/16**

(73) Patentinhaber: **Micronas GmbH**
**79108 Freiburg i. Br. (DE)**

(72) Erfinder: **Janke, Ralf, Dipl.-Ing.**
**79194 Gundelfingen (DE)**

(74) Vertreter: **Koch Müller**
**Patentanwaltsgesellschaft mbH**
**Maaßstraße 32/1**
**69123 Heidelberg (DE)**

(56) Entgegenhaltungen:
**EP-A- 0 048 851      DE-A- 3 636 111**
**DE-A- 19 719 633**

**Beschreibung**

Die Erfindung betrifft ein Sensorsystem mit veränderbarer Sensorsignalverarbeitung gemäß dem Oberbegriff des Anspruchs 1, sowie ein Verfahren zur Änderung der Signalverarbeitung in einem Sensorsystem gemäß dem Oberbegriff des Anspruchs 10.

Die bekannten Systeme bzw. Verfahren, von denen die Erfindung ausgeht, sind aus dem Stand der Technik in einer Vielzahl von Abwandlungen bekannt. Typische Sensorsysteme sind beispielsweise in "Hütte - die Grundlagen der Ingenieurwissenschaften, Herausgeber: Akademischer Verein Hütte e.v., Berlin, herausgegeben von Horst Czichos, 30. neu bearbeitete und erweiterte Auflage, Berlin: Springer Verlag 1996, Seite H 18 ff" beschrieben. Demzufolge umfasst ein Sensorsystem gemäß dem Stand der Technik eine Sensoreinheit und eine Auswertungseinheit. Die Sensoreinheit basiert im wesentlichen auf wenigstens einem Sensorelement zum Erfassen einer Meßgröße und zum Erzeugen eines die Meßgröße repräsentierenden Sensorsignals, sowie einer Sensorsignalverarbeitungseinheit zu einer Verarbeitung eines die Meßgröße repräsentierenden Sensorsignals gemäß vorgegebenen Parametern.

Die Auswertungseinheit ist zu einer Auswertung von von der Sensorsignalverarbeitungseinheit verarbeiteten Sensorsignalen vorgesehen.

Gemäß dem Stand der Technik sind eine Vielzahl von Sensortypen unterscheidbar. Beispielhaft werden im folgenden vier Haupttypen vorgestellt. Im einzelnen sind dies:

Sensoren, bei denen die Sensorsignalverarbeitung in der Sensorsignalverarbeitungseinheit nach festen Algorithmen erfolgt (Typ 1),

Sensoren, bei denen die Sensorsignalverarbeitung in der Sensorsignalverarbeitungseinheit frei programmierbar ist (Typ P),

Sensoren, bei der die Sensorsignalverarbeitung geregelt erfolgt (Typ R) und

Sensoren bei denen die Sensorsignalverarbeitung in der Sensorsignalverarbeitungseinheit sowohl programmierbar als auch regelbar ist.

1.) Sensoren vom Typ 1:

Sensorsysteme mit festen Signalverarbeitungsalgorithmen

Am weitesten verbreitet sind Sensorsysteme, die nach fest vorgegebenen Algorithmen eine in der Regel analoge physikalische oder chemische Meßgröße (M) in ein Ausgangssignal wandeln. Als physikalische Meßgröße seien beispielhaft Druck, Temperatur und Magnetfeld genannt. Als chemische Meßgröße kommen beispielsweise die Reaktionsgeschwindigkeit bei der chemischen Reaktion und die Reaktionsenthalpie o.ä. in Betracht.

Das Sensorelement selbst wandelt dabei zunächst die physikalische (oder chemische) Meßgröße (M) in ein internes Spannungssignal $U(M)$ um. Es ist jedoch auch möglich, daß ein von der Meßgröße M abhängiges Stromsignal oder ein von der Meßgröße M abhängiges optisches Signal erzeugt wird.

Die folgenden Ausführungen beziehen sich auf Sensorelemente, bei denen eine physikalische Meßgröße M in ein internes Spannungssignal $U(M)$ gewandelt wird, wobei die Amplitude des internen Spannungssignals $U(M)$ die physikalische Meßgröße M repräsentiert. Diese Annahme gilt jedoch ohne Beschränkung der Allgemeinheit.

Das Ausgangssignal (Out) der meisten Sensoreinheiten ist der Meßgröße M proportional. Jedoch gibt es - insbesondere bei Magnetfeldsensoren - Typen, die eine analoge Meßgröße M in ein Ausgangssignal (Out) transformieren, das nur noch zwei Zustände hat. Man spricht hier in der Regel von Schaltsensoren.

Derartige Sensoreinheiten (Schaltsensoren) haben zwei fest vorgegebene Schwellenwerte $G_1$ und $G_2$. Im folgenden sei a.b.d. $G_1 > G_2$. Diese erzeugen ausgangsseitig ein Signal Out= "1" wenn das interne Spannungssignal $U(M) > G_1$ ist, und ein Ausgangssignal Out= "0", wenn $U(M) < G_2$ ist:

$$
Out_{neu} = \begin{cases} 1, & \text{wenn } (U\,(M) > G_1 \quad \wedge \quad Out_{alt} = 0) \\[2em] 0, & \text{wenn } (U\,(M) < G_2 \quad \wedge \quad Out_{alt} = 1) \end{cases} \qquad (1)
$$

2.) Sensoren vom Typ P: Sensorsysteme mit frei programmierbaren Algorithmen

Neben Sensoreinheiten, bei denen die Sensorsignalverarbeittung nach festen Algorithmen abläuft gibt es Typen, bei denen dieser Algorithmus, nach dem die Meßgröße M in ein Ausgangssignal Out gewandelt wird, mit Hilfe fest vorgegebener Parameter frei programmiert werden kann. Diese fest vorgegebenen Parameter werden beispielsweise in EEPROM-Zellen gespeichert, welche sich auf demselben Chip befinden, wie die übrigen Komponenten - das Sensorelement und die Sensorsignalverarbeitungseinheit - der Sensoreinheit. Ein Beispiel dafür ist der analoge Sensor der Baureihe HAL800 des Herstellers MICRONAS. Sein analoges Ausgangssignal kann als

$$Out = c_1 * U(M) + c_2 \qquad (2)$$

in den Parametern $c_1$ und $c_2$ programmiert werden. Der Vorteil gegenüber den Sensoren vom Typ 1 besteht darin, daß durch die Programmierung fertigungsbedingte Streuungen und Einflußeffekte durch Wechselwirkungen des Sensorsystems mit seiner Wirkung reduziert werden können.

Ist der Programmiervorgang abgeschlossen, so verhält sich die Sensoreinheit wie eine Sensoreinheit vom Typ 1. Die Sensoreinheit besitzt demzufolge feste Einstellungen, mit denen die Meßgröße M in ein Ausgangssignal Out gewandelt wird. Die Programmiereinstellungen sind nicht mehr veränderbar. In der Fachsprache wird dieser Zustand als "Locked" bezeichnet.

3.) Sensoren vom Typ R: Sensoreinheiten mit Regelungs-Algorithmen

Bei einer dritten Klasse von Sensoreinheiten arbeitet die Sensorsignalverarbeitungseinheit mit internen Regelungs-algorithmen. Derartige Regelungsalgorithmen wandeln ein zeitlich veränderliches analoges internes Spannungssignal U(M,t) in ein Ausgangssignal Out. ( Die zeitliche Abhängigkeit des internen Spannungssignal U(M) ist durch das Bezugszeichen t gekennzeichnet.)

So existieren beispielsweise adaptive Magnetfeldsensoren, bei denen eine Hochpaßfilterung des internen Spannungssignals U(M) vorgenommen wird. Dies bedeutet konkret, daß ein Gleichanteil des internen Spannungssignals U(M) subtrahiert wird und im Idealfall nur ein sinusförmiges Wechselsignal $U(M_{AC})$ verbleibt. Übersteigt dieses verbleibende sinusförmige Wechselsignal einen vorgegebenen Schwellenwert $G_1$ so wird - wie im oben beschriebenen Beispiel - ein Ausgangszustand Out="1" erzeugt, ist der Wechselanteil geringer als ein zweiter Schwellenwert $G_2$, so wird das Ausgangssignal Out="0". Die mathematische Darstellung einer derartigen Ausgangssignalbildung ist der Gleichung (3) zu entnehmen:

$$U(M_{AC}) \Rightarrow U(M) - \int_{t_1}^{t_2} U(M)\, dt$$

$$Out_{neu} = \begin{cases} 1, & \text{wenn } (U(M_{AC}) > G_1 \ \wedge \ Out_{alt} = 0) \\ 0, & \text{wenn } (U(M_{AC}) < G_2 \ \wedge \ Out_{alt} = 1) \end{cases} \qquad (3)$$

Typ R - Sensoren berücksichtigen also im Gegensatz zu den vorher beschriebenen Typen auch den zeitlichen Verlauf der Meßgröße M.

4.) Sensoren vom Typ RP: Sensoren mit programmierbaren Regelungs-Algorithmen

Diese vierte Klasse von Sensoreinheiten stellt eine Kombination der unter 2.) und 3.) beschriebenen Typen dar. Sensoren vom Typ RP vereinigen folglich die Vorteile einer Sensoreinheit vom Typ P und einer Sensoreinheit vom Typ R. Die freie Programmierbarkeit der Signalverarbeitung gewährleistet zum einen einen Abgleich der Toleranzen eines Gesamtsystems bestehend aus mechanischen Komponenten und dem eigentlichen Sensorsystem, zum anderen wird sichergestellt, daß eine Reaktion des Ausgangssignals Out in Folge einer Regelung auf den momentanen zeitlichen Verlauf der Meßgröße M(t) erfolgt.

Ein wesentliches Problem konventioneller Sensorsysteme, welche vorzugsweise nach dem letztgenannten Verfahren arbeiten, liegt darin, daß Veränderungen des Sensorsystems insbesondere des Sensorelementes, innerhalb der Lebensdauer der Sensoreinheit nicht mehr ausgeglichen werden.

Aus der DE 36 36.111 A1 ist ein fernkälibtierendes Instrumentensystem bekannt, bei dem ein Transmitter, ein Empfänger und eine Kalibriervorrichtung durch eine Zweidräht-Übertragungsleitung verbunden sind. In der Kalibrier-Betriebart übermittelt die Kalibriervorrichtung Kalibrationsfreigabesignale, die den Transmitter veranlassen, eine Referenzadmittanz zum Vergleich mit einer erfassten Admittanz, die einem bekannten physischen Zustand entspricht, anzuheben und überwacht die bistabilen Ausgangssignale, die vom Transmitter übermittelt werden und die ihren Status ändern, wenn die angehobene Referenzadmittanz eine bestimmte Relation zu der erfassten Admittanz zeigt.

Aus der DE 197 19 633 A1 ist ein Messwertaufbereitungssystem zur Aufbereitung des Messsignals wenigstens eines Sensors bekannt, das eine interne Schnittstelle und eine konsequente Aufteilung der Funktionalität in ein rein sensorbezogenes Sensoranpassmodul ein rein bedingungsbezogenes Abgleichmodul aufweist. Das Abgleichmodul umfasst zumindest einen von einem Bediener einstellbaren Spannungsteiler zur Einstellung eines kontinuierlich oder diskret veränderbaren Parameters, welcher ausgangsseitig eine Abgleichspannung U_OUT über die Schnittstelle an das Sensoranpassmodul gibt, welches dort zu Zwecken des Nullabgleichs oder der Einstellung des Triggerpegels etc. verwendbar ist. Dabei wird die am Spannungsteiler eingangsseitig anliegende Referenz-Abgleichspannung über die Schnittstelle von dem Sensoranpassmodul vorgegeben. Der Wertebereich für die vom Bediener einstellbare Abgleichspannung durch das Sensoranpassmodul ist so vorgebbar, dass der gesamte Einstellbereich des von dem Bediener einstellbaren Spannungsteilers für einen sensorspezifischen Wertebereich nutzbar ist, unabhängig von der absoluten Höhe der Abgleichspannung, was eine durchgängig für alle Sensortypen gleichermaßen gute Genauigkeit der Einstellbarkeit ermöglicht.

Aus der EP 0 048 851 ist ein Korrekturverfahren bei digitalen elektrischen Längen- oder Winkelmesseinrichtungen bekannt, bei dem aus unveränderten, von der Messeinrichtung gelieferten periodischen Abtastsignalen in einem Interpolator Zwischenwerte gebildet werden. In einem Speicher sind Korrekturwerte abgespeichert, mit denen Interpolationswerte korrigiert werden können, in dem in einer Korrektureinrichtung, die einen Rechner enthält, die Korrekturwerte in der richtigen Reihenfolge in der jeweils richtigen Position den vorgenannten Interpolationswerten rechnerisch zugeordnet werden. Die so korrigierten Interpolationswerte werden als exakte Messwerte zur Anzeige gebracht.

Nachteilig bei diesen bekannten Sensorsystemen bzw. Verfahren zum Betrieb von Sensorsystemen ist, dass bei einer Aktualisierung des Sensorsystems nicht gleichzeitig gewährleistet ist, dass eine ständige Aktualisierung des Parametersatzes in der Auswerteeinheit stattfinden kann.

Der Erfindung liegt die Aufgabe zugrunde, die bekannten Verfahren derart auszugestalten und weiterzubilden, dass die geschilderte Problematik nicht mehr auftaucht. Insbesondere soll erreicht werden, dass stets eine optimale Signalverarbeitung erfolgt.

Diese Aufgabe wird durch ein Verfahren mit den Merkmalen des kennzeichnenden Teiles des Anspruchs 1 erfindungsgemäß gelöst.

Vorteilhafte Ausführungen der Weiterbildungen der Erfindung sind in den Unteransprüchen angegeben.

Der wesentliche Gedanke der Erfindung besteht darin, dass die Auswerteeinheit derart ausgebildet ist, dass auf Grund der von der Sensorsignalverarbeitungseinheit gelieferten Ausgangssignale zumindest ein Parameter zur Signalverarbeitung neu ermittelbar ist. Ferner sieht die Erfindung vor, dass mindestens eine Anschlussleitung zwischen der Sensorsignalverarbeitungseinheit und der Auswerteeinheit eine Verbindung zu einer Übertragung von mindestens einem der neu ermittelten Parameter zur Sensorsignalverarbeitung an die Sensorsignalverarbeitungseinheit darstellt. Die Sensorsignalverarbeitungseinheit ist erfindungsgemäß derart ausgebildet, dass die neu übertragenen

Parameter zur Sensorsignalverarbeitung die ursprünglich vorgegebenen Parameter ersetzen.

Die Auswertungseinheit ermittelt also erfindungsgemäß zu- mindest einen der Parameter zur Signalverarbeitung neu und überträgt zumindest einen dieser neu ermittelten Parameter über eine vorhandene Anschlussleitung oder eine ggf. bereits bestehende wireless (nicht leitungsgebundene) Verbindungsstrecke zwischen der Sensoreinheit und der Auswerteeinheit zur Signalverarbeitungseinheit. Die Sensorsignalverarbeitungseinheit stellt nun den neu übertragenen Parameter anstelle des entsprechenden alten Parameters ein. Stellt nun die Auswertungseinheit durch Analyse der Sensordaten und eventuell vorhandener sonstiger Daten fest, daß die Sensoreinheit mit einem veränderten Parametersatz eine bessere Meßwerterfassung aufweisen würde, so stellt das erfindungsgemäße Verfahren sicher, daß die Sensorsignalverarbeitung fernerhin mit diesem neuen Parametersatz durchgeführt wird.

Weiterhin sieht die Erfindung vor, daß eine notwendige Änderung eines Parameters zur Signalverarbeitung im laufenden (Sensor-) Betrieb ermittelbar ist. Dabei ist ferner vorgesehen, daß mindestens einer der neu ermittelten Parameter im laufenden Betrieb zur Signalverarbeitungseinheit übertragbar ist, so dass eine ständige Aktualisierung des Parametersatzes in der Sensorsignalverarbeitungseinheit gewährleistet wird. Diese Ausgestaltung der Erfindung ist insbesondere dann zwingend, wenn das Sensorsystem im Dauerbetrieb arbeitet bzw. arbeiten soll.

Bei einem derartigen Sensorsystem ist es erforderlich, daß der Übertragungsvorgang eines neuen Parametersatzes den laufenden Betrieb der Signalübertragung von der Sensoreinheit zur Auswertungseinheit nicht stört. Dies ist insbesondere dann wichtig, wenn eine exakte zeitliche Zuordnung erfolgen soll oder wenn Veränderungen oder Störungen sofort erkannt werden sollen. Aus diesem Grund sieht die Erfindung eine Filtereinrichtung vor, die eine Übermittlung von ermittelten Parametern nur dann zuläßt, wenn eine Signalübertragung von der Sensoreinheit dadurch nicht gestört ist.

Als erste Variante der Erfindung ist vorgesehen, daß zur Übertragung der neu ermittelten Parameter eine Anschlussleitung verwendet wird, welche ohnehin bereits zur Datenübermittlung von der Sensoreinheit zur Auswertungseinheit benötigt wird. Vorzugsweise wird dabei diejenige Anschlussleitung verwendet, welche mit dem zur Ausgabe des verarbeiteten Sensorsignals vorgesehenen Ausgang verbunden ist.

Diese Variante hat den Vorteil, daß keine weitere Verbindungsleitung zwischen der in der Regel in integrierter Form auf einem Chip vorliegenden Sensoreinheit mit Sensorelement und Signalverarbeitungseinheit und der extern angeordneten Auswertungseinheit benötigt wird. Dadurch ist insbesondere gewährleistet, daß diese neuartige erfindungsgemäße Sensorsystemgeneration hinsichtlich seines mechanischen und geometrischen Aufbaus der alten Sensorsystemgeneration gleicht. Eine Anpassung ist daher nicht erforderlich.

In einer zweiten Variante sieht die Erfindung vor, daß als Übertragungsleitung der ermittelten Parameter eine gemeinsame Energieversorgungsleitung der Sensoreinheit und der Auswerteinheit Verwendung findet. Auch in diesem Fall ist wie im vorangegangenen Beispiel gewährleistet, daß ein altes System problemlos durch ein erfindungsgemäßes Sensorsystem ersetzt werden kann. Insbesondere für den Einbau in ein Massenprodukt ist eine derartige Kompatibilität zwingende Voraussetzung.

Eine dritte Variante der Erfindung sieht vor, daß mindestens ein Parameter durch eine Änderung einer Ausgangslast zwischen der Sensorsignalverarbeitungseinheit und der Auswertungseinheit übermittelbar ist. Eine derartige Laständerung kann in an sich bekannter Weise von der Auswertungseinheit hervorgerufen und somit außerhalb der Sensoreinheit generiert werden.

Eine vierte Variante der Erfindung sieht vor, daß diese Ausgangslast kontinuierlich veränderbar ist, oder daß die Ausgangslast stufenweise veränderbar ist.

Alternativ oder zusätzlich sieht die Erfindung vor, daß mindestens ein Parameter durch eine Änderung einer Versorgungsspannung der Sensoreinheit übermittelbar ist. Eine derartige Modulation der Versorgungsspannung der Sensoreinheit setzt nicht zwingend voraus, daß Sensoreinheit und Auswertungseinheit von ein und derselben Spannungsquelle versorgt werden, sondern es ist auch möglich, daß mit Hilfe einer entsprechenden Steuerleitung die Spannungsversorgung der Sensoreinheit bzw. insbesondere der Sensorsignalverarbeitungseinheit moduliert wird.

Anwendung findet ein derartiges Sensorsystem bzw. ein derartiges Verfahren allgemein bei programmierbaren Sensorsystemen, bei denen eine Auswertungseinheit (Auswertungselektronik) ein Sensorsignal und eventuell vorhandene weitere Signale auswertet. Der Sensor ist dazu in einem oder mehreren Parametern programmierbar. Während des Betriebes stellt die Auswertungselektronik fest, daß ein Parameter geändert werden muss. Auf einem Kanal, der die Übertragung der eigentlichen Sensorsignale zur Auswertung zur Elektronik nicht stört, wird dem Sensor dieser Änderungswunsch mitgeteilt. Beispielhaft sei eine Erfassung von Magnetfeldänderungen genannt, eine Methode, die insbesondere zur Messung der Winkelstellung der Kurbelwelle, Nockenwelle und ABS im Kraftfahrzeug angewandt wird.

Zwei Ausführungsbeispiele der Erfindung sind in der Zeichnung dargestellt und werden im folgenden näher beschrieben. Es zeigen:

Figur 1     eine Struktur einer ersten Ausführungsform eines erfindungsgemäßen Sensorsystems

Figur 2     eine Struktur einer zweiten Ausführungsform eines erfindungsgemäßen Sensorsystems.

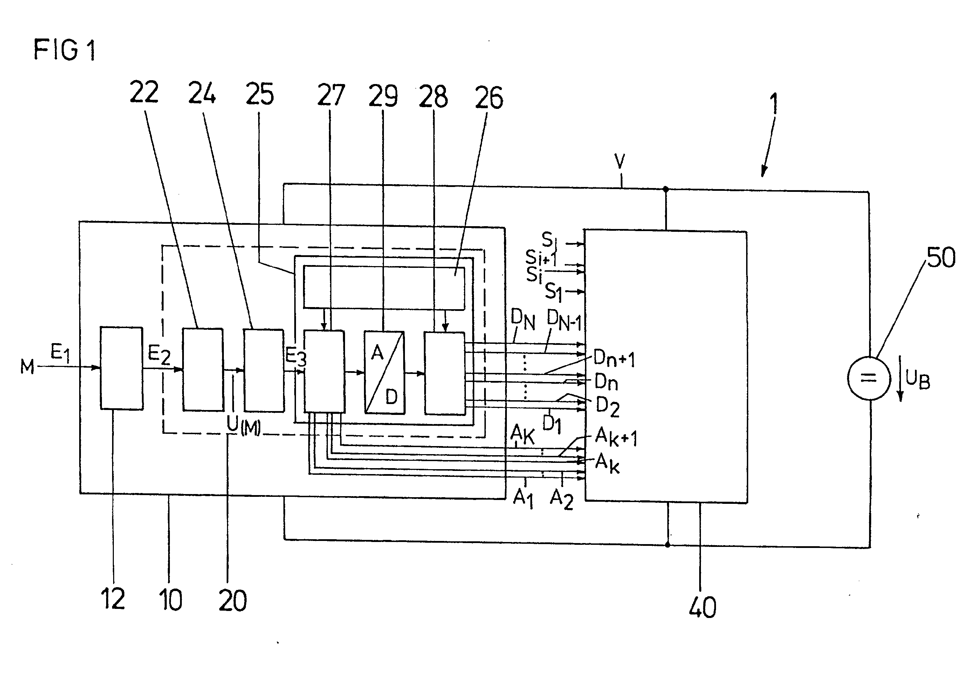

Die Figur 1 zeigt in Blockdarstellung ein erfindungsgemäßes Sensorsystem, dessen Grundkomponenten grundsätzlich auch Bestandteil eines herkömmlichen Sensorsystems sein können. Erfindungsgemäß erhalten jedoch einzelne Komponenten des Sensorsystems Zusatzfunktionen, welche im folgenden beschrieben werden. Auf separate Blocksymbole betreffend diese Zusatzfunktionen der Schaltungskomponenten wird der Übersichtlichkeit halber im folgenden verzichtet.

Aus der Figur 1 sind die Grundkomponenten eines Sensorsystems 1 zu entnehmen, deren Standardfunktionen beispielsweise aus der zitierten Literaturstelle "Hütte" entnehmbar sind. Im Beispiel basiert das Sensorsystem 1 auf einer Sensoreinheit 10 und einer Auswertungseinheit 40, welche im Beispiel mit Hilfe der Energieversorgungseinheit 50 mit elektrischer Energie versorgt werden.

Die Sensoreinheit 10 ist überlicherweise auf einem Siliciumchip untergebracht. Die Auswertungseinheit 40 ist über eine größere Anzahl von Verbindungsleitungen mit der Sensoreinheit 10 verbunden. Diese befindet sich in der Regel räumlich getrennt von der Sensoreinheit 10. Die Auswertungseinheit 40 kann möglicherweise ein kleiner Mikrorechner sein oder auch Bestandteil eines größeren Automatisierungssystems. Je nach Anwendungsfall erfolgt die Verbindung zwischen der Sensoreinheit 10 und der Auswertungseinheit 40 über eine einzige Leitung, über mehrere Leitungen oder gar ein Datenbus. Im Beispiel besteht die Sensoreinheit 10 aus einem Sensorelement 12 und einer an das Sensorelement 12 anschließenden Ausgangssignalerzeugungseinheit 20. Die Ausgangssignalerzeugungseinheit 20 besteht im Beispiel aus einer Meßgrößenaufbereitungseinheit 22, einer daran anschließenden Verstärkereinheit 24 und der eigentlichen Sensorsignalverarbeitungseinheit 25.

Die im Beispiel eingezeichneten Schaltungsblöcke Meßgrößenaufbereitungseinheit 22 und Verstärkereinheit 24 sind optionale Einheiten, d. h. diese Schaltungselemente müssen nicht zwangsweise Bestandteil der Sensoreinheit 10 sein. Im Beispiel sind diese lediglich zu diesem Zweck angeführt, um aufzuzeigen, daß die Ausgangssignalerzeugungseinheit 20 Schaltungselemente aufweist, deren Funktionsweise von außen nicht veränderbar ist und Schaltungselemente - im Beispiel die Sensorverarbeitungseinheit 25 -, bei denen die Funktionen mit äußeren Mitteln verändert werden können.

Die Sensorsignalverarbeitungseinheit 25 besteht aus einer Analogsignalverarbeitungseinheit 27, einem daran anschließenden Analog/Digital - Umsetzer und einer an diesen anschließenden Digitalsignalverarbeitungseinheit 28. Die Analogsignalverarbeitungseinheit 27 und die Digitalsignalverarbeitungseinheit 28 sind im Beispiel mit einem Parameterspeicher 26 verbunden.

Die Analogsignalverarbeitungseinheit 27 ist im Beispiel mit einer größeren Anzahl an Signalausgängen $A_1$, $A_2$ ... $A_k$, $A_{k+1}$...$A_K$ mit der Auswertungseinheit 40 verbunden. In analoger Weise bestehen eine größere Anzahl von Signalausgängen $D_1$,$D_2$...$D_n$, $D_{n+1}$...$D_N$ der Digitalverarbeitungseinheit 28, welche mit der Auswertungseinheit 40 verbunden sind. Fernerhin weist die Auswertungseinheit 40 eine größere Anzahl von Steuersignaleingängen $S_1$...$S_i$,$S_{i+1}$,...$S_I$ auf.

Die Funktionsweise eines derartigen Sensorsystems 1 ergibt sich wie folgt:

Dem Eingang $E_1$ des Sensorelementes 12 wird eine chemische oder physikalische Meßgröße M zugeführt. Das Sensorelement 12 wandelt diese physikalische oder chemische Meßgröße M vorzugsweise in ein elektrisches Signal um. Das elektrische Signal wird in der Regel ein von der Meßgröße M abhängiges Spannungs- oder Stromsignal sein, dessen Amplitude sich mit der Meßgröße M ändert. Dieses elektrische Signal liegt nun ausgangsseitig am Ausgang $E_2$ des Sensorelementes 12 an. Der Ausgang $E_2$ des Sensorelementes 12 bildet gleichzeitig den Eingang einer Meßgrößenaufbereitungseinheit 22. Diese Meßgrößenaufbereitungseinheit 22 kann beispielsweise ein Stromspannungswandler sein. Es ist jedoch auch denkbar, daß dieser die vorzugsweise elektrische Eingangsgröße in ein optisches Signal wandelt. Im Beispiel ist angenommen, daß ein internes Spannungssignal U(M) erzeugt wird, dessen Amplitude im wesentlichen proportional zur Messgröße M ist.

Häufig ist es erforderlich, daß dieses interne Spannungssignal U(M) zunächst in einer Verstärkereinheit 24 verstärkt wird, um Störeinflüsse zu eliminieren und um eine ordnungsgemäße Signalverarbeitung zu gewährleisten. Ein derartig aufbereitetes internes Spannungssignal U(M) steht nun am Ausgang der Verstärkereinheit 24 zur Sensorsignalverarbeitung bereit. Der Ausgang der Verstärkereinheit 24 bildet gleichzeitig den Eingang $E_3$ der Sensorsignalverarbeitungseinheit 25.

In der Sensorsignalverarbeitungseinheit 25 wird dieses interne Spannungssignal U(M) in seiner als Analogsignal vorliegenden Form mit Hilfe der Analogsignalverarbeitungseinheit 27 verarbeitet. Beispielsweise können in der Analogsignalverarbeitungseinheit 27 Intergrationen oder Differentiationen durchgeführt werden. Im Beispiel ist angedeutet, daß jeder einzelne Verarbeitungsschritt möglicherweise direkt ein Ausgangssignal erzeugt, welches an den eingezeichneten Signalausgängen $A_1$,$A_2$...$A_k$,$A_{k+1}$..$A_K$ abgegriffen werden kann.

Im Beispiel ist diese Analogsignalverarbeitung in der Analogsignalverarbeitungseinheit 27 von außen mit Hilfe eines Parametersatzes veränderbar. Dieser Parametersatz ist beispielsweise im Parameterspeicher 26 abgelegt.

Sensorsysteme neuer Generationen verzichten in der Regel auf eine aufwendige Analogsignalverarbeitung. Daher wird die Schaltungskomponente Analogsignalverarbeitungseinheit 27 in der Regel nicht Bestandteil der Sensorsignalverarbeitungseinheit 25 sein. Die beispielhafte Implementierung einer derartigen Analogsignalverarbeitungseinheit 27 soll jedoch demonstrieren, daß der vorliegende Erfindungsgedanke nicht allein auf Sensorsysteme mit überwiegend digitaler Signalverarbeitung beschränkt ist.

Ein derartig analog verarbeitetes Signal wird im Beispiel nun einem Analog/Digital - Umsetzer 29 zugeführt, wo es in der Regel als internes Ausgangssignal einer Digitalsignalverarbeitungseinheit 28 zugeführt wird. In dieser Digitalsignalverarbeitungseinheit 28 wird das Sensorsignal nun in an sich bekannter Weise verarbeitet und dann ausgangsseitig unmittelbar als paralleles oder serielles Signal abgeführt oder es werden gegebenenfalls nach unterschiedlichen Verarbeitungsschritten mehrere parallele oder serielle Signale abgeführt. Eine derartige Schnittstelle ist im Beispiel mit Hilfe der Signalausgänge $D_1$,$D_2$..$D_n$...$D_{n+1}$,...$D_N$ gekennzeichnet.

Gemäß dem Stand der Technik ist diese Digitalsignalverarbeitung in der Digitalsignalverarbeitungseinheit 28 mit Hilfe eines in dem Parameterspeicher 26 abgelegten Parametersatzes parametrierbar. Als Parameterspeicher 26 werden gemäß dem Stand der Technik vorzugsweise EEPROM-Zellen verwendet, welche auf dem gleichen Chip angeordnet sind, wie die übrigen Komponenten der Sensoreinheit 10.

In Anlehnung an die Beschreibung der Funktionsweise eines Sensorsystems vom Typ R soll im Beispiel die Funktionsweise eines Sensorsystems 1 gemäß der Erfindung erläutert werden:

Unter der Annahme, daß die Analysemöglichkeiten der von der Sensoreinheit, insbesondere der Sensorsignalverarbeitungseinheit 25, gelieferten Sensordaten (wie die Signalausgänge $D_1,D_2,...D_n,D_{n+1}..D_N;A_1,A_2..A_k.A_{k+1}, ...A_k$) und eventuell vorhandener sonstiger Daten (gegebenenfalls übermittelt über die Steuersignalleitungen $S_1...S_i,S_{i+1}...S_l$) in der Auswertungseinheit 40 dazu führen, daß es günstig wäre, einen Parameter innerhalb der Sensoreinheit 10 (Parameterspeicher 26) zu ändern, ergibt sich folgender Datenverkehr:

Beispielsweise könnte die Auswertungseinheit 40 berechnen, daß die Subtraktion des Wechselanteiles $U(M_{AC})$ im laufenden Betrieb noch einmal um einen Korrekturwert U korrigiert werden muss, um eine bessere Performance des Gesamtsystems zu erreichen. Die Berechung der Korrekturgröße U erfolgt also außerhalb der Sensoreinheit 10 in der Auswertungseinheit 40. Die Korrekturgröße $\Delta U$ wird nun beispielsweise in der Digitalsignalverarbeitungseinheit 28, d. h. innerhalb der Sensoreinheit 10, eingestellt, so dass folgende Signalverarbeitung durchgeführt werden kann:

$$U(M_{AC}) \Rightarrow U(M) - \int_{t2}^{t1} U(M)dt \ + \Delta U$$

$$Out_{neu} = \begin{cases} 1, \ \text{wenn} \ (U(M_{AC}) \ > G_1 \quad Out_{alt} = 0) \\ \\ 0, \ \text{wenn} \ (U(M_{AC}) \ < G_2 \quad Out_{alt} = 1) \end{cases} \qquad (5)$$

$U(M_{AC})$ stellt wiederum den Wechselanteil des internen Spannungssignals U(M) und $\Delta U$ die oben erwähnte Korrekturgröße dar. Das neue Ausgangssignal $Out_{neu}$ unter scheidet sich wie im voran beschriebenen Beispiel vom ursprünglichen alten Ausgangssignal $Out_{alt}$, wenn der Wechselanteil $U(M_{AC})$, - welcher durch die Korrekturgröße $\Delta U$ eine Veränderung erfahren hat -, nun auf Grund dieser Änderung entsprechenden Schwellenwert $G_1$ über bzw. den Schwellenwert $G_2$ unterschritten hat.

Erfindungsgemäß wird eine Korrektur des Parametersatzes im Parameterspeicher 26 dadurch möglich, daß die Auswertungseinheit 40 im laufenden Betrieb der Sensoreinheit 10 über eine oder mehrere der vorhandenen Anschlussleitungen, welche im Beispiel mit den Bezugszeichen $A_1,A_2...A_k,A_{k+1},...A_K$ gekennzeichnet sind, den Wert der Korrekturgröße $\Delta U$ als Parameter überträgt.

Dies bedeutet insbesondere, daß durch den Übermittlungs- bzw. Übertragungsvorgang der laufende Betrieb der Signalübertragung von der Sensoreinheit 10 zur Auswertungseinheit 40 nicht gestört werden darf. Beispielsweise darf bei zeitkritischen Systemen in Kraftfahrzeugen, wie der Drehwinkelmessung an einem Zahnrad (Nockenwelle, Kurbelwelle oder ABS), die zeitliche Abbildung der Winkel ($Out_{alt}$="1" nach $Out_{neu}$="0" oder umgekehrt) durch den Korrekturvorgang nicht gestört werden.

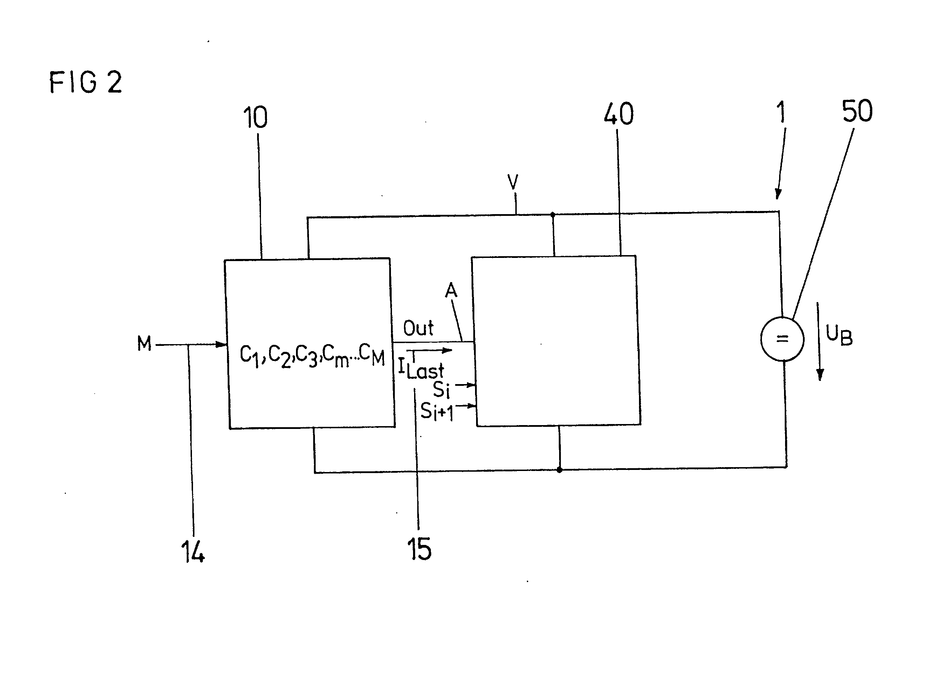

Zur weiteren Verdeutlichung der Erfindung zeigt die Figur 2 ein weiteres erfindungsgemäßes Sensorsystem 1, bestehend aus einer Sensoreinheit 10 und einer mit dieser über eine Anschlussleitung A verbundenen Auswertungseinheit 40. Beide Komponenten, die Sensoreinheit 10 und die Auswertungseinheit 40, sind durch eine elektrische Energieversorgungseinheit 50 über die Versorgungs- leitung V mit der Versorgungsspannung $U_B$ mit elektrischer Energie versorgt. Dem Sensorsystem 1 ist eine physikalische oder chemische Meßgröße M zuführbar, welche in der Sensoreinheit 10 in der beschriebenen Weise gewandelt und verarbeitet wird und als Ausgangssignal Out über die Anschlussleitung A an die Auswertungseinheit 40 übertragbar ist.

Diese Signalverarbeitung in der Sensoreinheit 10 ist im Beispiel durch die programmierbaren Parameter ($c_1$, $c_2$, $c_3$, ...$c_m$, $c_{m+1}$, ..$c_M$) gekennzeichnet. Ferner sind beispielhaft zwei der Auswertungseinheit 40 zugeordnete Steuersignalleitungen eingezeichnet, über welche die Steuersignale $s_i$ bzw. $s_{i+1}$ der Auswertungseinheit 40 zuführbar sind.

Die Figur 2 zeigt das Zusammenspiel zwischen analoger Meßgröße M der Sensoreinheit 10 und der Auswertungseinheit 40. Die mit Hilfe der Bezugszeichen 14 und 15 gekennzeichneten Pfeile geben die Informations- bzw. Datenflußrichtung der Ermittlung eines Meßeffektes im laufenden Betrieb des Sensorsystems 1 an. Insbesondere gibt der Pfeil mit den Bezugszeichen "15" zwischen der Sensoreinheit 10 und der Auswertungseinheit 40 den Datenfluß an, wie - bei einer programmierten Sensoreinheit 10 im Zustand "Locked" -, Daten von der Sensoreinheit (10) zur Auswertungseinheit (40) übertragen werden.

Bei bisher bekannten Sensoren besteht nur eine Möglichkeit, die in der Sensoreinheit (10) gespeicherten Parameter $c_1, c_2, c_3 \ldots c_n \ldots c_M$ im Betrieb zu beeinflussen. Erfindungsgemäß ist nun vorgesehen, daß die Auswertungseinheit (40) das Signal Out (und gegebenenfalls weitere Betriebsparameter der Sensoreinheit 10) analysiert. Vorteilhafterweise ist es auch möglich, weitere, von der Sensoreinheit selbst unabhängige, Steuersignale $s_i$ bzw. $s_{i+1}$ zu dieser Analyse hinzuzuziehen. Die Auswertungseinheit (40) überprüft nun mit Hilfe der ihr zur Verfügung stehenden Daten die Gültigkeit des Parametersatzes $c_1, c_2, c_3 \ldots c_m \ldots c_M$.

Beispielhaft wird im folgenden ein Sensorsystem 1 betrachtet, bei der die Sensoreinheit (10), ein System bestehend aus einem Permanentmagneten und einem Zahnrad, die Drehung des Zahnrades durch die Messung seines Magnetfeldes in eine zeitliche Pulsfolge abbildet. Das an die Auswertungseinheit (10) vermittelte Ausgangssignal Out besteht aus einer Folge von "0" und "1", die beispielsweise über einen Open-Collector-Ausgang übertragen werden können.

Der Einfachheit halber sei angenommen, daß die Eingriffmöglichkeiten der Auswertungseinheit (40) in die Sensorsignalverarbeitung (welche in der Regel als Sensor-Algorithmus bezeichnet wird) sich auf einen einzigen Parameter, die Korrekturgröße $\Delta U$, beschränken. Wird von der Auswertungseinheit (40) ermittelt, daß dieser Parameter, die Korrekturgröße $\Delta U$ geändert werden soll, so ist erfindungsgemäß vorgesehen, daß dieses Änderungserfordernis der Sensoreinheit (10) dadurch übermittelt wird, daß die Last zwischen der Sensoreinheit (10) und der Auswertungseinheit (40) verändert wird. Diese Last-Änderung wird in der Auswertungseinheit (40) hervorgerufen und somit außerhalb der Sensoreinheit (10) generiert. Ein Beispiel ist die Last, welche sich bei im wesentlichen konstanter Spannung als veränderbarer Laststrom ergibt und mit Hilfe des Bezugssymbols $I_{Last}$ gekennzeichnet ist.

Fließt beispielsweise im normalen Betrieb mittlerer Laststrom $I_0$ im Signallastpfad, so kann der Sensoreinheit (10) durch eine Änderung der Ausgangslast mit dem Laststrom $I_1$, welcher größer als der mittlere Laststrom $I_0$ im Normalbetrieb ist, mitgeteilt werden, das die Korrekturgröße $\Delta U$ erhöht werden soll. Durch eine Änderung des Laststroms beispielsweise auf einen Wert $I_2 > I_1 > I_0$ kann auch eine Verringerung der Korrekturgröße $\Delta U$ übertragen werden. Die Änderung des Laststroms von $I_0$ auf $I_1$ oder $I_2$ kann kontinuierlich erfolgen oder mit einer bestimmten Frequenz.

Die Sensoreinheit weist eine Schaltungsanordnung auf, welche die Änderung des Laststroms $I_{Last}$ von $I_0$ auf $I_1$ oder $I_2$ erkennen kann und dann den Parameter, die Korrekturgröße $\Delta U$ entsprechend variiert.

Es ist dabei zu berücksichtigen, daß die Zeit die die Sensoreinheit 10 zur sicheren Erkennung des Änderungswunsches benötigt der Auswertungseinheit 40 bekannt ist, so dass die veränderte Last $I_{Last}$ auch hinreichend lange aufrechterhalten bleibt. Die Signalverarbeitungseinheit bzw. die Sensoreinheit 10 ändert daraufhin den Wert der Korrekturgröße $\Delta U$ in entsprechender Weise. Eine Rückmeldung zur Auswertungseinheit 40 ist nicht erforderlich. Auf diese Weise ist es möglich, das die Auswertungseinheit 40 zunächst weiter mit dem veränderten Laststrom $I_2$ bzw. $I_1$ arbeitet oder, was in der Regel sinnvoller ist, mit dem niedrigsten Laststrom $I_0$. Die Auswertungseinheit 40 wird nun weiter analysieren, ob die Änderung ausreichend war. Wenn eine weitere Änderung erforderlich sein sollte, fordert die Auswertungseinheit 40 wiederum diese Änderung an. Bevorzugterweise erfolgt eine Änderung mit dem kleinstmöglichen Inkremental.

Erfindungsgemäß sind weitere Möglichkeiten der Übertragung eines veränderten Parametersatzes $c_1, c_2 \ldots$ denkbar. Voraussetzung ist allerdings, dass stets der laufende Betrieb nicht gestört wird.

Erfindungsgemäß ist vorgesehen, daß diese Versorgungsspannung $U_B$ der Sensoreinheit 10 und/oder der Sensorsignalverarbeitungseinheit (25) moduliert werden kann. Die Sensoreinheit (10) erkennt anhand der Modulation, welcher Parameter $c_i$ auf welche Art und Weise und um welchen Betrag geändert werden muss. Im einfachsten Fall handelt es sich stets um denselben Parameter, wobei dieser vorzugsweise in kleinstmöglichen Schritten erhöht oder erniedrigt wird.

Auf diese Weise ergeben sich eine große Zahl möglicher Anwendungsgebiete. Ganz allgemein eignen sich dafür programmierbare Systeme, bei denen eine Auswertungseinheit 40 ein Sensorsignal und eventuell vorhandene weitere Signale auswertet. Die Sensoreinheit 10 muss in einem oder mehreren Parametern $c_i$ frei programmierbar sein. Ein Beispiel derartiger Systeme ist die Sensierung von Magnetfeldsignalen beispielsweise zur Detektierung und Regelung der Winkelstellung der Kurbelwelle, der Nockenwelle bzw. des Antiblockiersystems in einem Kraftfahrzeug.

Bezugszeichenliste

| | |
|---|---|
| 1 | Sensorsystem |
| 10 | Sensoreinheit |
| 12 | Sensorelement |
| 14 | Datenflußrichtung |
| 15 | Datenflußrichtung |
| 20 | Ausgangssignalerzeugungseinheit |

| 22 | Meßgrößenaufbereitungseinheit |
|---|---|
| 24 | Verstärkereinheit |
| 25 | Sensorsignalverarbeitungseinheit |
| 26 | Parameterspeicher |
| 27 | Analogsignalverarbeitungseinheit |
| 28 | Digitalsignalverarbeitungseinheit |
| 29 | Analog/Digital-Umsetzer |
| 40 | Auswertungseinheit |
| 50 | Energieversorgungseinheit |
| A | Anschlußleitung |
| AC | Wechselsignalanteil |
| $A_1, A_2 .. A_k .. A_{k+1}, A_K$ | Signalausgänge |
| $c_1, c_2, c_3 .. c_m .. c_M$ | Parameter |
| $D_1, D_2 .. D_n, D_{n+1}, D_N$ | Signalausgänge |
| $E_1$ | Eingang |
| $E_2$ | Ausgang |
| $E_3$ | Eingang |
| $G_1, G_2$ | Schwellenwert |
| $I_{Last}$ | Laststrom |
| $I_2, I_1, I_0$ | Laststromwert |
| M | Meßgröße |
| Out | Ausgangssignal |
| $Out_{alt}/Out_{neu}$ | altes/neues Ausgangssignal |
| $S_i, S_{i+1}$ | Steuersignal |
| $S_1, S_2 .. S_{i+1} .. S_I$ | Steuersignaltypen |
| t | Zeit |
| $t_1, t_2$ | Zeitpunkt |
| $\Delta U$ | Korrekturgröße |
| $U_B$ | Versorgungsspannung |
| $U(M)$ | internes Spannungssignal |
| V | Versorgungsleitung |

**Patentansprüche**

1. Verfahren zur Änderung einer Signalverarbeitung in einem Sensorsystem mit folgenden Merkmalen:

   a) in einem Sensorelement (12), welches Bestandteil einer Sensoreinheit (10) ist, wird eine Messgröße (M) erfasst und ein die Messgröße (M) repräsentierendes Sensorsignal $(U(M))$ erzeugt,

   b) das Sensorsignal $(U(M))$ wird in einer Sensorsignalverarbeitungseinheit (25), welche ebenfalls Bestandteil der Sensoreinheit (10) ist, gemäß vorgegebener Parameter $(C_1, C_2, C_3, ..., C_m, ....C_M)$ verarbeitet, wobei die Parameter $(C_1, C_2, C_3, ..., C_m, ....C_M)$ von außen eingestellt werden,

   c) zumindest ein in der Sensorsignalverarbeitungseinheit (25) verarbeitetes Signal (Out) wird an eine Auswertungseinheit (40) übertragen und in dieser ausgewertet,

   d) die Auswertungseinheit (40) ermittelt anhand des übertragenen Signals zumindest einen der Parameter $(C_1, C_2, C_3, ..., C_m, ...C_M)$ zur Signalverarbeitung neu,

   e) die Auswerteeinheit (40) überprüft die Gültigkeit des zumindest einen Parameters und ermittelt, ob eine Änderung des zumindest einen Parameters erforderlich ist,

   f) die Auswertungseinheit (40) überträgt bei einer erforderlichen Änderung diesen zumindest einen Parameter $(C_1, C_2, C_3, ..., C_m, ....C_M)$ über eine vorhandene Anschlussleitung (A) zwischen der Sensoreinheit (10) und der Auswerteeinheit (40),

   g) die Sensorsignalverarbeitungseinheit (25) stellt diesen zumindest einen übertragenen Parameter $(C_1, C_2, C_3, ..., C_m, ...C_M)$ ein,

   h) bei einer erforderlichen Änderung des zumindest einen Parameters $(C_1, C_2, C_3, ..., C_m, ....C_M)$ wird dieser im laufenden Betrieb nur dann zur Sensorsignalverarbeitungseinheit (10, 25) übertragen, wenn die Übertragung von Signalen (Out) von der Sensorsignalverarbeitungseinheit (25) dadurch nicht gestört wird, so dass eine ständige Aktualisierung des Parametersatzes in der Sensorsignalverarbeitungseinheit gewährleistet wird und das Sensorsystem im Dauerbetrieb arbeiten kann.

**2.** Verfahren nach Anspruch 1, **dadurch gekennzeichnet, dass** zumindest der neu ermittelten Parameter ($C_1$, $C_2$, $C_3$, ... $C_m$ ... $C_M$) über eine gemeinsame Energieversorgungsleitung (V) des Sensorsystems (10) und der Auswertungseinheit (40) übertragen wird.

**3.** Verfahren nach Anspruch 1, **dadurch gekennzeichnet, dass** zumindest der neu ermittelte Parameters ($C_1$, $C_2$, $C_3$,..., $C_m$, ....$C_M$) über die Anschlussleitung (A) übertragen wird, über die das in der Sensorsignalverarbeitungseinheit (25) verarbeitete Signal (Out) zur Auswertungseinheit (40) übertragen wird.

**4.** Verfahren nach einem der Ansprüche 1 oder 2, **dadurch gekenn**- zeichnet, dass mindestens ein Parameter ($C_1$, $C_2$, $C_3$,..., $C_m$, ....$C_M$) durch eine Änderung einer Ausgangslast ($I_{Last}$) zwischen der Signalverarbeitungseinheit (10, 25) und der Auswertungseinheit (40) übermittelt wird.

**5.** Verfahren nach Anspruch 4, **dadurch gekennzeichnet, dass** die Ausgangslast ($I_{Last}$) kontinuierlich verändert wird.

**6.** Verfahren nach Anspruch 4 oder 5, **dadurch gekennzeichnet, dass** die Ausgangslast ($I_{Last}$) stufenweise verändert wird.

**7.** Verfahren nach einem der Ansprüche 1 bis 6, **dadurch gekennzeichnet, dass** mindestens ein Parameter ($C_1$,$C_2$,$C_3$,...$C_m$...$C_M$) durch eine Änderung der Versorgungsspannung ($U_B$) der Sensoreinheit (10) übermittelt wird.

**8.** Anwendung des Verfahrens nach einem der Ansprüche 1 bis 7 in allgemein programmierbaren Systemen.

**9.** Anwendung des Verfahrens nach einem der Ansprüche 1 bis 8 in der Messwerterfassung von Magnetfeldsignalen.

**Claims**

**1.** Method of changing a signal processing in a sensor system, comprising the following features:

a) a measurement variable (M) is detected, and a sensor signal (U(M)) representing the measurement variable (M) is generated, in a sensor element (12) which is a component of a sensor unit (10),
b) the sensor signal (U(M)) is processed in a sensor signal processing unit (25), which is similarly a component of the sensor unit (10), according to predetermined parameters ($C_1$, $C_2$, $C_3$, ..., $C_m$, ... $C_M$), wherein the parameters ($C_1$, $C_2$, $C_3$, ..., $C_m$,.... $C_M$) are set externally,
c) at least one signal (Out) processed in the sensor signal processing unit (25) is transmitted to an evaluating unit (40) and evaluated therein,
d) the evaluating unit (40) newly determines on the basils of the transmitted signal at least one of the parameters for signal processing,
e) the evaluating unit (40) checks the validity of the at least one parameter and determines whether a change of the at least one parameter is required,
f) the evaluating unit (40) transmits in the case of a required change this at least one parameter ($C_1$, $C_2$, $C_3$, ..., $C_m$, ... $C_M$) via a connecting line (A) present between the sensor unit (10) and the evaluating unit (40),
g) the sensor signal processing unit (25) sets this at least one transmitted parameter ($C_1$, $C_2$, $C_3$, .... $C_m$, ... $C_M$) and
h) in the case of a required change of the at least one parameter ($C_1$, $C_2$, $C_3$,... $C_m$, .... $C_M$) this is transmitted in ongoing operation to the sensor signal processing unit (10, 25) only if the transmission of signals (Out) from the sensor signal processing unit (25) is not disrupted by that, so that a constant updating of the parameter set in the sensor signal processing unit is ensured and the sensor system can operate in continuous operation.

**2.** Method according to claim 1, **characterised in that** at least the newly determined parameter ($C_1$, $C_2$, $C_3$, ..., $C_m$, ... $C_M$) is transmitted by way of a common energy supply line (V) of the sensor system (10) and the evaluating unit (40).

**3.** Method according to claim 1, **characterised in that** at least the newly determined parameter ($C_1$, $C_2$, $C_3$, ..., $C_m$, ... $C_M$) is transmitted by way of the connecting line (A), by way of which the signal (Out) processed in the sensor signal processing unit (25) is transmitted to the evaluating unit (40).

**4.** Method according to one of claims 1 and 2, **characterised in that** at least one parameter ($C_1$, $C_2$. $C_3$, ..., $C_m$, ... $C_M$) is transmitted by charge of an output load ($I_{Last}$) between the signal processing unit (10, 25) and the evaluating unit (40).

5. Method according to claim 4, **characterised in that** the output load ($I_{Last}$) is changed continuously.

6. Method according to claim 4 or 5, **characterised in that** the output load ($I_{Last}$) is changed in steps.

7. Method according to any one of claims 1 to 6, **characterised in that** at least one parameter ($C_1$, $C_2$, $C_3$, ..., $C_m$, ... $C_M$) is transmitted by a change in the supply voltage ($U_B$) of the sensor unit (10).

8. Use of the method according to any one of claims 1 to 7 in generally programmable systems.

9. Use of the method according to any one of claims 1 to 8 in measured value detection of magnetic field sensors.

**Revendications**

1. Procédé pour modifier un traitement de signal dans un système de capteur présentant les caractéristiques suivantes :

   a) dans un élément de capteur (12), qui fait partie d'une unité de capteur (10), on détecte une grandeur de mesure (M) et on produit un signal de capteur [U(M)] représentant la grandeur de mesure (M),
   b) on traite le signal de capteur [U(M)] dans une unité de traitement de signal de capteur (25) qui fait également partie de l'unité de capteur (10), selon des paramètres prédéterminés ($C_1$, $C_2$, $C_3$, ..., $C_m$, ... $C_M$), les paramètres ($C_1$, $C_2$, $C_3$, ..., $C_m$, ..., $C_M$) étant réglés de l'extérieur,
   c) on transmet au moins un signal (Out) traité dans l'unité de traitement de signal de capteur (25) à une unité d'évaluation (40) et on l'évalue dans celle-ci,
   d) l'unité d'exploitation (40) détermine de nouveau, à l'aide du signal transmis, au moins l'un des paramètres ($C_1$, $C_2$, $C_3$, ..., $C_m$, ..., $C_M$) pour le traitement du signal,
   e) l'unité d'évaluation (40) vérifie la validité dudit au moins un paramètre et détermine si une modification dudit au moins un paramètre est nécessaire,
   f) l'unité d'évaluation (40) transmet, dans le cas où une modification est nécessaire, ledit au moins un paramètre ($C_1$, $C_2$, $C_3$, ..., $C_m$, ..., $C_M$), au moyen d'une ligne de connexion (A) entre l'unité de capteur (10) et l'unité d'évaluation (40),
   g) l'unité de traitement de signal de capteur (25) règle ledit au moins un paramètre transmis ($C_1$, $C_2$, $C_3$, ..., $C_m$, ..., $C_M$),
   h) dans le cas où une modification dudit au moins un paramètre ($C_1$, $C_2$, $C_3$, ..., $C_m$, ..., $C_M$) est nécessaire, on ne transmet celui-ci en fonctionnement courant à l'unité de traitement de signal de capteur (10, 25) que lorsque la transmission de signaux (Out) n'est pas perturbée de ce fait par l'unité de traitement de signal de capteur (25), de telle manière qu'une actualisation permanente du jeu de paramètres dans l'unité de traitement de signal de capteur (25) soit garantie et que le système de capteur puisse travailler en marche permanente.

2. Procédé selon la revendication 1, **caractérisé en ce que** l'on transmet au moins le paramètre nouvellement déterminé ($C_1$, $C_2$, $C_3$, ..., $C_m$, ..., $C_M$) au moyen d'une ligne d'alimentation en énergie commune (V) du système de capteur (10) et de l'unité d'évaluation (40).

3. Procédé selon la revendication 1, **caractérisé en ce que** l'on transmet au moins le paramètre nouvellement déterminé ($C_1$, $C_2$, $C_3$, ..., $C_m$, ..., $C_M$) au moyen de la ligne de connexion (A), par laquelle le signal (Out) traité dans l'unité de traitement de signal de capteur (25) est transmis à l'unité d'évaluation (40).

4. Procédé selon l'une des revendications 1 ou 2, **caractérisé en ce que** l'on détermine au moins un paramètre ($C_1$, $C_2$, $C_3$, ..., $C_m$, ..., $C_M$) par une modification d'une charge de sortie ($I_{Last}$) entre l'unité de traitement de signal (10, 25) et l'unité d'évaluation (40).

5. Procédé selon la revendication 4, **caractérisé en ce que** l'on modifie en continu la charge de sortie ($I_{Last}$).

6. Procédé selon la revendication 4 ou 5, **caractérisé en ce que** l'on modifie par paliers la charge de sortie ($I_{Last}$).

7. Procédé selon l'une quelconque des revendications 1 à 6, **caractérisé en ce que** l'on détermine au moins un paramètre ($C_1$, $C_2$, $C_3$, ..., $C_m$, ..., $C_M$) par une modification de la tension d'alimentation ($U_B$) de l'unité de capteur (10).

**8.** Application du procédé selon l'une quelconque des revendications 1 à 7 dans des systèmes généralement programmables.

**9.** Application du procédé selon l'une quelconque des revendications 1 à 8 dans la détection de valeurs de mesure de signaux de champ magnétique.

FIG 1

EP 1 197 731 B1

FIG 2

EP 1 197 731 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3636111 A1
- DE 19719633 A1
- EP 0048851 A

**In der Beschreibung aufgeführte Nicht-Patentliteratur**

- Hütte - die Grundlagen der Ingenieurwissenschaften, Herausgeber: Akademischer Verein Hütte e.v. Springer Verlag, 1996, 18 ff